# EUROPEAN PATENT APPLICATION

(11) **EP 1 219 385 A1**
(43) Date of publication of application: **03.07.2002**
(21) Application number: 01204878.1
(22) Date of filing: 13.12.2001
(51) Int. Cl.: B23Q 3/06

(54) **Clamping method**

(30) Priority: 21.12.2000 NL 1016950
(71) Applicant: K.M.W.E. Precisie Eindhoven B.V., 5653 LC Eindhoven (NL)
(72) Inventor: Huizing, Mathijs Maria, 5521 RS Eersel (NL)
(74) Representative: Dorna, Peter

(57) **Abstract**

A method for the multi-spindle machining of a starting material for the purpose of manufacturing a product, comprising the steps of
- A: clamping down the starting material on a machine table
- B: machining the clamped-down starting material into the product
- C: creating an engagement portion in the starting material to be machined prior to carrying out step A, which engagement portion is present on the outside of the product
- D: clamping down the engagement portion by clamping means, which are detachably connected to the machine table, so as to make it possible to carry out step A.

## Description

The invention relates to a method for the multi-spindle machining of a starting material for the purpose of manufacturing a product, comprising the steps of
- A: clamping down the starting material on a machine table
- B: machining the clamped-down starting material into the product.

Modern multi-spindle metal removing machines, such as four-spindle and five-spindle milling machines, make it possible to manufacture a growing number of products having complex geometries by means of a machining operation thanks to the use of numeric control. In accordance with the prior the art, starting material is clamped down on a machine table in such operations. To this end, the machine table is generally provided with T-shaped slots, via which the starting material can be clamped down on the machine table by means of bolts and clamps. In addition to that, jig-like constructions specially designed for a specific product may be used. Generally, the manufacture of such jig-like constructions is only profitable when larger amounts of products are to be manufactured.

A general drawback of the prior art is the fact that the various sides of the starting material that are to be machined are not accessible or not optimally accessible for the machining tools due to the manner in which the starting material is clamped down. Consequently, it is necessary to clamp down the starting material more than once, for example in a second, third or fourth clamping position, so as to make it possible to machine the various sides. Such a method is very time-consuming and may lead to faults if the starting material is not correctly clamped down between the respective operations. In addition, when loose clamping means such as clamps and bolts are used, said clamping means will generally not be located at exactly the same positions every time that identical products are manufactured either in succession or at intervals. This involves the risk of the machining tool unexpectedly striking against a clamping means, such as a clamp, in the course of a numeric moving and machining programme, which may cause damage both to the machining tool and to the product, which damage may be irreparable in the latter case.

Another problem is the relatively long re-setting times that are required when different products are to be manufactured in succession by means of a machining operation. The reason for these long re-setting times is the fact that the clamping down of the starting material and the definition of a zero point thereof take up a great deal of time. Especially in the case of relatively simple products, re-setting takes up an undesirably great deal of time in comparison with the cycle time.

It is an object of the invention to provide a method as referred to in the introduction, which primarily provides an optimum accessibility of the starting material to be machined for the tool by means of which the machining operation is carried out, wherein five sides, for example, can be reached by the tool in one and the same clamping position. Another object of the invention is to reduce the cycle times significantly, whether in preferred embodiments of the invention or not, by using a universally utilizable clamping method.

The method according to the invention is characterized by the steps of
- C: creating an engagement portion in the starting material to be machined prior to carrying out step A, which engagement portion is present on the outside of the product
- D: clamping down the engagement portion by clamping means, which are detachably connected to the machine table, so as to make it possible to carry out step A.

The creation of the engagement portion, which can take place by means of a machining operation, is based on the fact that the dimensions of the starting material are intrinsically larger than those of the product. The engagement portion can be formed in this so-called surplus stock, of which the engagement portion forms part in that case, as it were. The term product should by no means be understood to mean an end product. Within the framework of the invention, the term product is to be understood to include semi-manufactured products as well. As a result of the use of an engagement portion, practically the whole outer surface of the product remains accessible to the machining tool. The only exception in this regard is formed by the area surrounding the position at which the engagement portion is connected with the product. This in contrast to the prior art, according to which a starting material is clamped down in a point located between two opposed sides of the starting material, as a result of which said sides are at least in part inaccessible for machining thereof. Since the clamping means according to the prior art are substantially U-shaped, with the clamping action taking place between the legs of the U shape, a third side, which interconnects the two opposed sides, will generally not be accessible, or only to a limited degree. These drawbacks are avoided by forming the engagement portion on the outer side of the product, so that only one surface, or rather a part thereof, depending on the size of the product, is not accessible, or only to a limited degree. In many cases, this advantage makes it possible to realise the milling of a product having a complex geometry without an interim change of the clamping position being required. A maximum degree of precision is achieved on account of the fact that all tolerances as regards shape and location are realised from one and the same clamping position.

The method according to the invention is preferably characterized in that the clamping means are connected to the machine table via a reference holder. Although it is possible within the framework of the invention to connect the clamping means directly to the machine table, the use of a reference holder has this advantage that functions can be separated, as a result of which it is possible to use a set of universally utilizable clamping means and a set of universally utilizable reference holders. The reference holder functions to create a reference point or zero point for the machining operation, whilst the clamping means merely function to fix the starting material in position in a suitable manner.

In accordance with the method according to the invention, the engagement portion is preferably removed from the product after completion of step B. Since the engagement portion does not have a function with regard to the product itself, the engagement portion can be removed, if desired. It is very well possible, though, that the engagement portion does not have a negative effect on the product, so that the removal of the engagement portion can be omitted.

Preferably, the engagement portion is dovetailed. Such a shape lends itself quite well for a clamping method as referred to above and, in addition, it requires only a limited amount of surplus stock.

The invention furthermore relates to a product obtained by using a method according to the invention.

The invention furthermore relates to clamping means for use in a method according to the invention, wherein first connecting means are provided for detachable connection of the starting material to the engagement portion, and wherein also second connecting means are provided for detachable connection of the clamping means to a machine table. The latter connection can also be realised indirectly for that matter, for example via a reference holder.

According to one preferred embodiment, said first connecting means comprise a dovetailed opening including two opposed flanks and a central surface interconnecting said flanks, which flanks can clampingly co-operate with flanks of an engagement portion having a corresponding dovetail shape under the influence of clamping forces. The main advantage of such a dovetail shape is that such a shape is relatively simple to form in a starting material, and that it is possible to realise a combined form-locked and force-locked connection therewith, in which the height along which the engagement portion is to extend outside the outer surface of the product is small in comparison with other shapes. In addition, a dovetailed connection makes the whole so stiff that the starting material will be capable of withstanding large machining forces.

According to one embodiment, a slot extends from the central surface, which slot facilitates the movement towards each other of the flanks for clamping activity thereof.

The invention furthermore relates to a reference holder for use in a method according to the above-described invention, wherein third connecting means are provided for detachable connecting co-operation with a machine table, and wherein fourth connecting means are furthermore provided for detachable connection of the reference holder to the clamping means.

According to one preferred embodiment, said third connecting means are made up of cylindrical parts for clamping co-operation with hydraulic clamping cylinders forming part of a machine table. Such third connecting means make it possible to position the reference holder in exactly the same position with respect to the machine table each time, as a result of which it is no longer necessary to define zero points for each individual product as long as the reference holder remains connected to the machine table.

When using clamping means according to the invention in combination with a reference holder according to the invention, the second connecting means and the third connecting means are preferably suitable for clamping co-operation with each other.

The invention will now be explained in more detail with reference to a number of figures.

Fig. 1 is a perspective view of the upper side of a machine table.

Fig. 2 shows a method of clamping a product down on a machine table.

Fig. 3 is a cross-sectional view of a part of Fig. 2.

Fig. 4 is a perspective view of a clamping block.

Fig. 5 shows the clamping block according to Fig. 5 in the view indicated by arrow V.

Figs. 6A - 6D schematically show the method according to the invention.

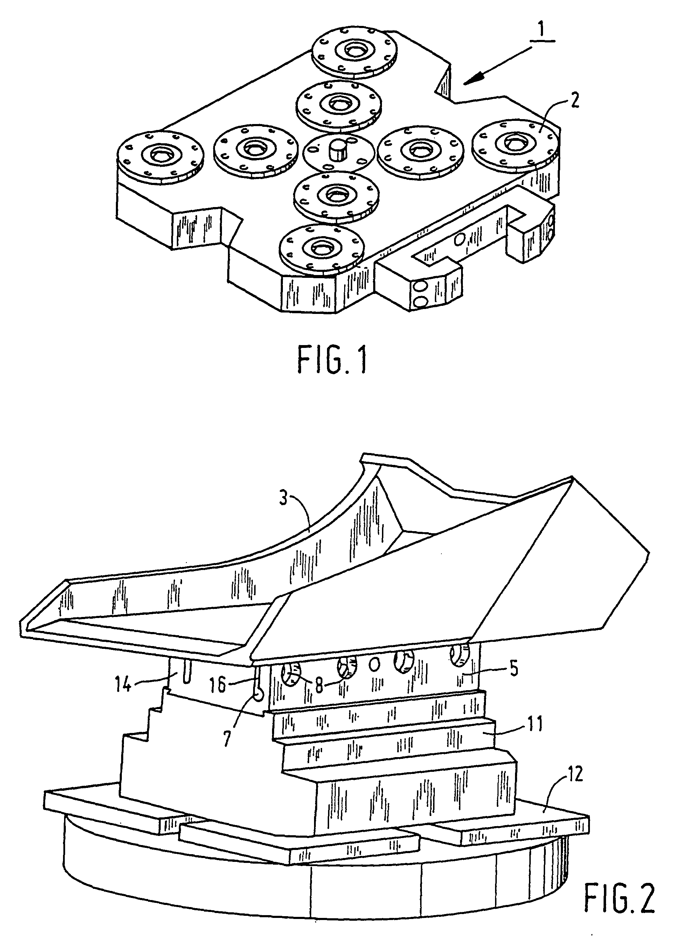

Fig. 1 shows a machine table 1 which can be used with the invention. The machine table 1 includes eight hydraulic clamping cylinders 2, which are arranged crosswise. The machine table 1 may be a stationary table or a manipulatable table, which can be translated and/or rotated with respect to a machining tool. All eight hydraulic cylinders form a possible reference position for the machining operation. Preferably, at least two clamping cylinders 2 are used for clamping down a starting material.

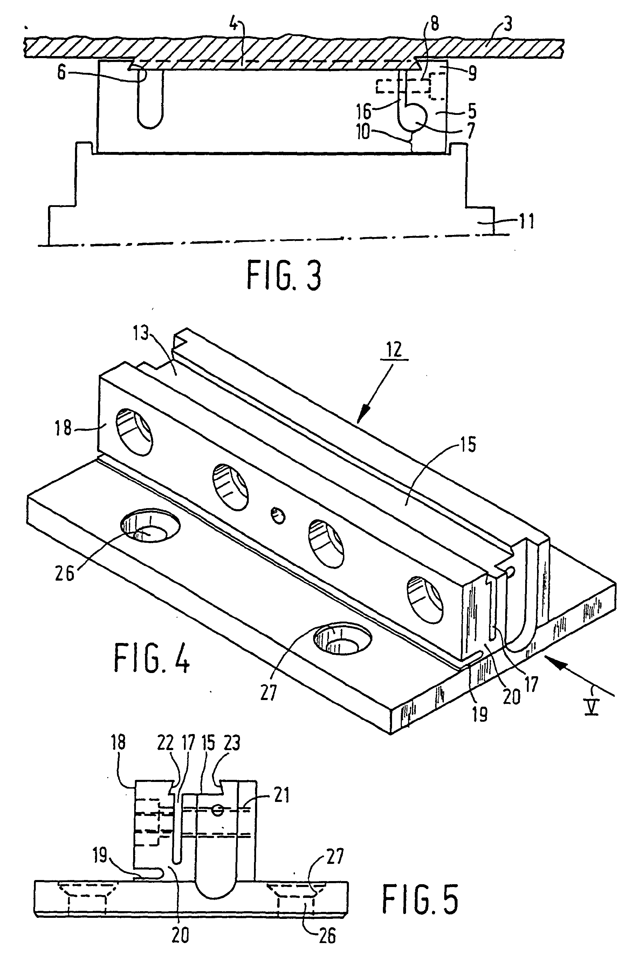

Fig. 2 shows a method of clamping down a product 3 having a complex geometry. As is shown in cross-sectional view in Fig. 3 along a plane parallel to the front face 14 of clamping block 5, the product 3 includes a dovetailed engagement portion at the bottom side thereof, which extends over part of the length of the product. The product 3 is fixed in position by a clamping block 5, which is provided with a dovetailed recess 6 at its upper side, in which the engagement portion 4 of the product 3 is clampingly accommodated. To this end, a slot 16 is formed in longitudinal direction on a first side of clamping block 5, which slot extends perpendicularly to the central surface of recess 6, and which opens into a bore 7 at the bottom side. Four internally threaded boreholes 8 are formed from the side of clamping block 5, which boreholes extend transversely to slot 16 on either side of said slot 16, and which are provided with internal screw thread on the slide of slot 16 that faces away from the first side. When Allen screws (not shown) present in boreholes 8 are tightened, the lateral portion 9 present between slot 16 and the outer side is bent towards the centre of clamping block 5, with the bridge 10 between bore 7 and the underside of clamping block 5 functioning as a hinge. Thus, the dovetailed engagement portion 4 is clamped down on the outer side of the product 3 by the clamping block 5.

The clamping block 5 is detachably connected, in a manner which is not shown, to reference holder 11, which is provided with cylindrical parts (not shown) at its bottom side, which parts are accommodated in clamping cylinders (not shown) in machine table 12, which clamping cylinders are comparable to the clamping cylinders 2 in Fig. 1.

Once the product 3 is finished, it is detached from the clamping block 5 and the engagement portion 4 can be removed, if desired.

Figs. 4 and 5 show an alternative clamping block 12, which is provided with a dovetailed recess 13 which is narrower than the recess of the clamping block that is shown in Figs. 2 and 3. A slot 17 extends from the base surface 15 of recess 13, perpendicularly to said base surface. A slot 19 extends parallel to the base surface 15 at the bottom side of lateral surface 18. Slots 17 and 19 define a bridge portion 20 between themselves, which bridge portion functions as a hinge, just like the bridge 10 of the embodiment according to Figs. 2 and 3. When Allen screws (not shown) present in internally threaded bores 21 extending on either side of slot 17 are tightened, flank 22 is moved in the direction of flank 23 so as to obtain a clamping effect. Two fixing flanges 24, 25 extend in the same plane, parallel to the base surface 15, on two opposed sides of the clamping block 12. Two bores 26 including recessed portions 27 are formed in each of said fixing flanges 24, 25. Clamping block 25 can be accurately fixed to a reference holder 11 by using screws (not shown) having a recessed head.

The use of a limited number of different clamping blocks 12 that may differ from each other, for example as regards the width and the length of the dovetailed recesses, makes it possible to clamp down a large number of different products while using a limited number of clamping blocks. Depending on the dimensions and the geometry of the product to be manufactured, a suitable dovetail shape, which can function as an engagement portion for one of the clamping blocks, is formed in the starting material of which the product is to be made. In addition to that, use can be made of a limited number of reference holders, from which a selection is made for positioning the starting material optimally with respect to the machining tool. To this end, the clamping blocks preferably include uniform facilities, such as bores 26, for fixing the clamping blocks to the reference holders 12, thus enabling a maximum number of combinations of reference holders and clamping blocks.

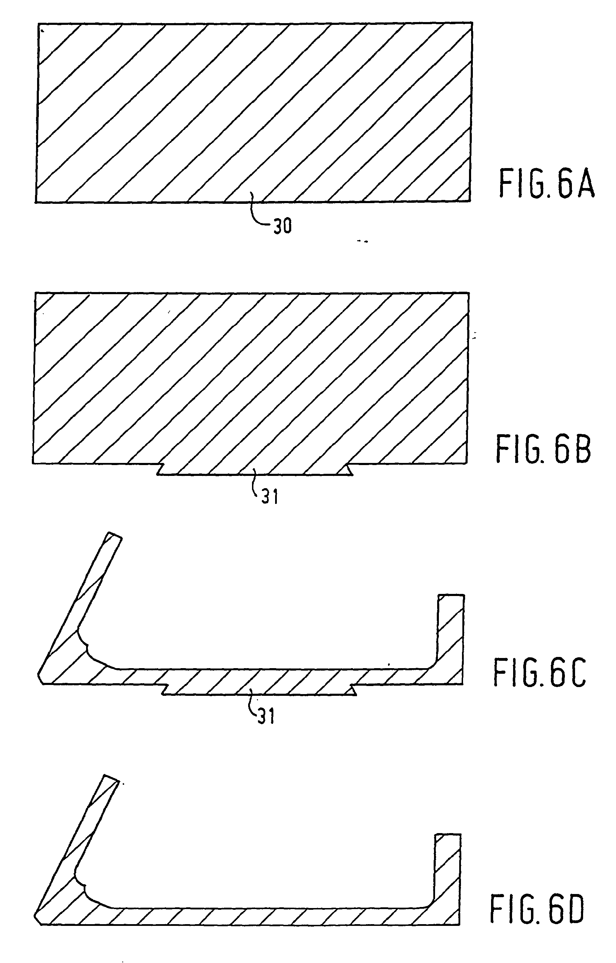

In Figs. 6A - 6D, the method according to the invention is schematically shown once again. An engagement portion 31 having a dovetail shape is created on machinable starting material 30 (Fig. 6A) by means of a machining operation. Then the starting material 30 including the engagement portion 31 is set up by clamping the engagement portion 31 down in a clamping block, for example as shown in Fig. 3. In this clamped-down position, the starting material 30 is subjected to a machining operation, in such a manner that it will assume the desired geometry of a product to be formed (Fig. 6C). Finally, the engagement portion 31 is removed (Fig. 6D) after the product has been detached from its clamped-down position.

## Claims

1. A method for the multi-spindle machining of a starting material for the purpose of manufacturing a product, comprising the steps of
A clamping down the starting material on a machine table
B machining the clamped-down starting material into the product **characterized by** the steps of
C creating an engagement portion in the starting material to be machined prior to carrying out step A, which engagement portion is present on the outside of the product
D clamping down the engagement portion by clamping means, which are detachably connected to the machine table, so as to make it possible to carry out step A.

2. A method according to claim 1, **characterized in that** the clamping means are connected to the machine table via a reference holder.

3. A method according to any one of the preceding claims, **characterized in that** the engagement portion is removed from the product after completion of step B.

4. A method according to any one of the preceding claims, **characterized in that** the engagement portion is dovetailed.

5. A product obtained by using a method according to any one of the preceding claims.

6. Clamping means for use in a method according to any one of the claims 1 - 4, **characterized in that** first connecting means are provided for detachable connection of the starting material to the engagement portion, and **in that** second connecting means are provided for detachable connection of the clamping means to a machine table.

7. Clamping means according to claim 6, **characterized in that** said first connecting means comprise a dovetailed opening including two opposed flanks and a central surface interconnecting said flanks, which flanks can clampingly co-operate with flanks of an engagement portion having a corresponding dovetail shape under the influence of clamping forces.

8. Clamping means according to claim 7, **characterized in that** a slot extends from said central surface.

9. A reference holder for use in a method according to claim 2, 3 or 4, **characterized in that** third connecting means are provided for detachable connecting co-operation with a machine table, and **in that** fourth connecting means are furthermore provided for detachable connection of the reference holder to the clamping means.

10. A reference holder according to claim 9, **characterized in that** said third connecting means are made up of cylindrical parts for clamping co-operation with hydraulic clamping cylinders forming part of a machine table.

11. A reference holder according to claim 9 or 10, in combination with clamping means according to claim 6, 7 or 8, **characterized in that** said second connecting means and said third connecting means are suitable for co-operation with each other.
